# EUROPEAN PATENT APPLICATION

(11) **EP 4 537 703 A1**
(43) Date of publication of application: **16.04.2025**
(21) Application number: 24205606.7
(22) Date of filing: 09.10.2024
(51) Int. Cl.: A47B 47/00, A47B 47/02, A47B 57/48, A47B 96/02, A47B 96/06, A47B 96/14

(54) **IMPROVED MODULAR SHELVING UNIT**

(30) Priority: 10.10.2023 IT 202300021012
(71) Applicant: Italmodular S.r.l., 26025 Pandino, (CR) (IT)
(72) Inventor: AKINGBALA, Dupe, 24051 ANTEGNATE (BG) (IT)
(74) Representative: Ripamonti, Enrico

(57) **Abstract**

An improved modular shelving unit (10, 10') comprising vertical uprights (12, 50), side beams (14, 51) arranged in pairs for each shelf of the shelving unit and positioned between two parallel vertical uprights (12, 50) to support horizontal shelves (15), cross members (16, 52) arranged between two vertical uprights (12, 50) transversely to the side beams (14, 51), the shelving unit comprising male-female type quick attachment means of said side beams (14, 51) with respect to the uprights (12, 50) and of said cross members (16, 52) with respect to said uprights (12, 50), with said male-female type quick attachment means comprising a first connection element (26, 56) (or female fitting) adapted to couple with the side beam (14, 51) and the cross member (16, 52) and a second connection element (40, 80) (or male fitting) adapted to couple with the uprights (12, 50), the first connection element (26, 56) (or female fitting) comprising a first base body (28, 58) from a front (28', 58') of which, in a direction perpendicular to said front, a protruding leg (30, 60) extends, comprising a vertical portion (30', 60'), from opposing fronts of which a pair of opposing protruding projections (32, 62) extends, the base body (28, 58) further comprising an insert seat (34, 70) formed in the thickness of said base body (28, 58) at a front (28", 58") opposite to the front (28', 58') and extending in a longitudinal extension direction of said base body (28, 58) .

## Description

The present invention relates to an improved modular shelving unit.

More specifically, the present invention relates to a modular shelving unit the assembly of which is performed without using nuts and bolts or the like and without the need to use assembly tools.

As known, a modular shelving unit is a support structure functional to organizing and storing goods, materials, various items in an orderly, efficient and flexible manner. Such a type of shelving unit is composed of mutually separate components which can be easily assembled or disassembled to allow creating the desired configuration for the shelving unit or to reconfigure it or to allow it to be moved, or the like.

The modularity feature allows the shelving unit structure to be customized according to the specific needs of use and space available; further, such shelving units generally are simple to assemble and allow easy adjustment in terms of reconfiguration which can, for example, relate to varying the position of the shelves.

Conventionally, a modular shelving unit comprises vertical uprights defining the bearing structure of the shelving unit, horizontal cross members or beams connecting the uprights to and making them integral with one another to create the bearing structure of the shelving unit, shelves which are the stabilized horizontal surfaces with respect to the beams and uprights and are functional to supporting and housing items to be stored, any support brackets for connecting the shelves to the cross members and beams, any hooks or accessories, any support feet on the ground, and further and any accessory components.

With reference to the methods for assembling the components described above, bolted, interlocking and hybrid systems are known.

Bolted assembly systems have the advantage of being flexible because they allow increased modularity of combinations to be arranged and further allow a solid shelving unit structure not requiring stability bracing to be obtained.

However, such a bolt assembly system has some significant drawbacks associated with the fact that in order to obtain such a connection, there is a need to provide holes on the metal structure, to be made by means of mechanical machine drilling or with laser-tube technology or according to otherwise known machining.

A further drawback of a bolted assembly system is the fact that in order to assemble the shelving unit, there is a need to provide work tools of the wrench and screwdriver type, which requires considerable time by an operator charged with the mounting assembly.

The interlocking assembly system is conventionally used for lightweight or average load applications, with the joints made of plastic material (which are engaged with other components of the same shelf) or metal material (which are obtained from the metal structure, i.e., from the pedestals, shelves or sides, or the like).

A drawback of such an assembly type is the material forming the joints and which affects the load bearing capacity of the shelving unit (smaller load in the case of plastic material joints).

A further drawback of these known assembly systems is a reduced stability with respect to a bolted assembly system (for example, due to the fact that the absence of fixed connections may generate oscillations or bending, to the detriment of the safety of the products stored on the shelving unit).

A further drawback of such an assembly type is a low resistance to wear, considering the fact that the joints can loosen or wear out, with the risk of compromising the stability and load bearing capacity of the shelving unit. The hybrid assembly system comprises connections of the welded-joint or bolted-joint type, i.e., it defines an assembly system combining the two assembly systems described above.

An example of such an assembly system is described in US10299588.

Also such a known shelving unit assembly method has some significant drawbacks represented by assembly complexity associated with the fact that the components must, for example, be pre-assembled by means of bolts and subsequently, they have to be made integral by means of joints.

Such an assembly complexity involves increased assembly times for the shelving unit, with a consequent and correlated increase in costs.

A further drawback is the fact that such an assembly type can give rise to the formation of weak points in the shelving unit structure, and this can have a negative effect on the stability and load bearing capacity of the shelving unit itself.

A further drawback of a hybrid assembly is the fact that it involves a limitation in the adjustment (for example, a height adjustment) of components of the support shelf type and, further, it can result in a limitation with reference to customizing the configuration of the structure.

It is the object of the present invention to obviate the drawbacks disclosed above.

More specifically, it is the object of the present invention to provide a modular shelving unit adapted to facilitate and speed up the assembly and disassembly operations of the shelving unit.

It is a further object of the present invention to provide a modular shelving unit the assembly of which does not require the use of special tools of the wrench and/or screwdriver type and the like.

It is a further object of the present invention to provide a modular shelving unit for which any variation in configuration is simple, quick and easy.

It is a further object of the present invention to provide users with an improved modular shelving unit adapted to ensure increased reliability and durability over time and that can be also affordable and easy to make.

These and other objects are achieved by the invention having the features outlined in claim 1.

According to the invention, there is provided an improved modular shelving unit comprising vertical uprights (12), side beams arranged in pairs for each shelf of the shelving unit and positioned between two parallel vertical uprights to support horizontal shelves, cross members arranged between two vertical uprights transversely to the side beams, the shelving unit comprising male-female type quick attachment means of said side beams with respect to the uprights and of said cross members with respect to said uprights.

Advantageous embodiments of the invention become apparent from the dependent claims.

The construction and functional features of the improved modular shelving unit of the present invention may be better understood from the following detailed description in which reference is made to the accompanying drawings which show an embodiment thereof given only by way of explanation and not by way of limitation, and in which:

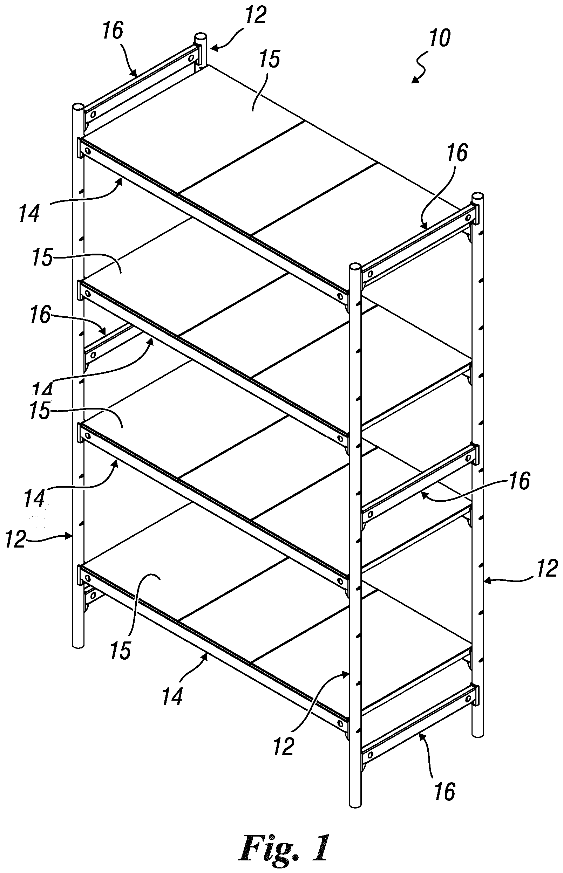

Figure 1 diagrammatically shows an assembled modular shelving unit according to the invention;
Figure 2 diagrammatically shows an enlarged portion of the shelving unit in Figure 1;
Figures 3 and 4 diagrammatically show a component functional to assembling the modular shelving unit of the invention;
Figures 5 and 6 diagrammatically show a further component functional to assembling the modular shelving unit of the invention;
Figure 7 diagrammatically shows an enlarged detail of the components in Figures 3 to 6, in use for assembling the modular shelving unit;

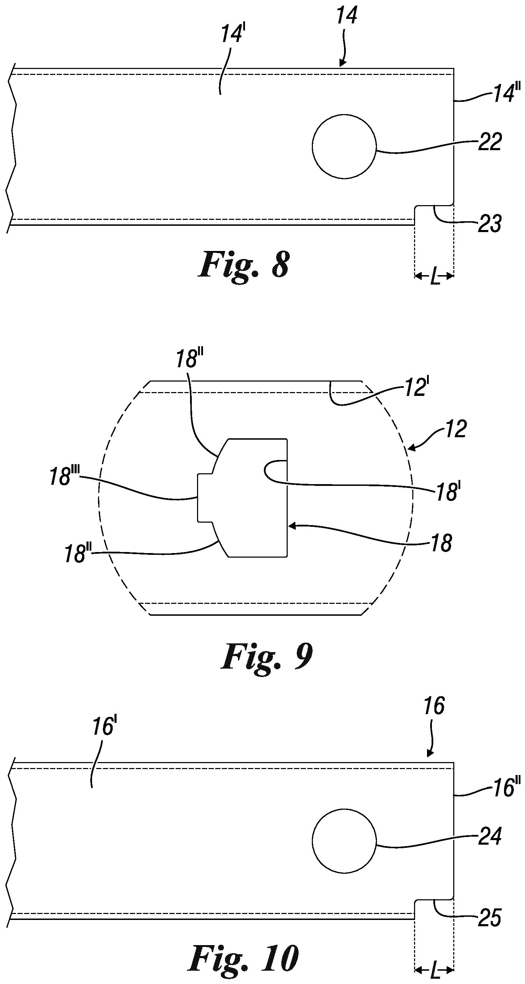

Figures 8, 9 and 10 diagrammatically show portions of structural components defining the frame of the modular shelving unit;
Figure 11 diagrammatically shows an assembled modular shelving unit according to an alternative embodiment of the invention;
Figure 12 diagrammatically shows an enlarged portion of the shelving unit in Figure 11;
Figures 13 and 14 diagrammatically show a component functional to assembling the modular shelving unit of the invention, according to an alternative embodiment;
Figures 15 and 16 diagrammatically show a further component functional to assembling the modular shelving unit of the invention, according to an alternative embodiment;
Figure 17 diagrammatically shows an enlarged detail of the components in Figures 13 to 16, in use for assembling the modular shelving unit according to the alternative embodiment;
Figures 18, 19, 20, 21 and 22 diagrammatically show portions of structural components defining the frame of the modular shelving unit according to the alternative embodiment.

With reference to the above drawings, the improved modular shelving unit of the invention, indicated globally by numeral 10, comprises vertical uprights 12 defining the main part of the bearing structure of the shelving unit (in the embodiment in the drawings of two pairs of parallel vertical uprights for each shelving unit section), side beams 14 arranged in pairs for each shelf of the shelving unit and positioned between two parallel vertical uprights 12 to support horizontal shelves 15, cross members 16 arranged between two vertical uprights 12 transversely to the side beams and functional to making the vertical uprights 12 mutually integral to one another and, further, the shelving unit of the invention comprises quick attachment means of said side beams with respect to the vertical uprights and of said cross members with respect to said vertical uprights.

The single vertical upright 12 consists of a longitudinally extending tubular element 12' and provided along the faces (at least two faces) having longitudinal extension of a plurality of through type openings 18 equally spaced apart from one another and that comprise a first portion 18' with a generally rectangular outline which joins, by means of a pair of opposing shoulders 18'', with a second portion 18‴, equally with a generally rectangular outline and with smaller dimensions than those of the first portion 18' .

The single side beam 14' comprises a tubular element 14' (preferably hollow therein) having longitudinal extension which, at each of the opposing ends 14'', comprises a transverse through opening or hole 22 and, equally at said opposing ends, comprises a transverse pocket 23 extending in an "L"-shaped stretch from an edge of the opposing ends and in the longitudinal extension direction.

The cross member 16 comprises a tubular element 16' (preferably hollow inside) having longitudinal extension which, at each of the opposing ends 16", comprises a transverse through opening or hole 24 and, equally at said opposing ends, comprises a transverse pocket 25 extending in an "L"-shaped stretch from an edge of the opposing ends and in the longitudinal extension direction.

The side beam 14 and the cross member 16 have the same sectional profile.

The uprights 12, the side beams 14 and the cross members 16 preferably are machined with a laser cutting technique (laser-tube) with reference to making the openings 18, transverse through holes 22 and 24 and the transverse pockets 23 and 25, respectively.

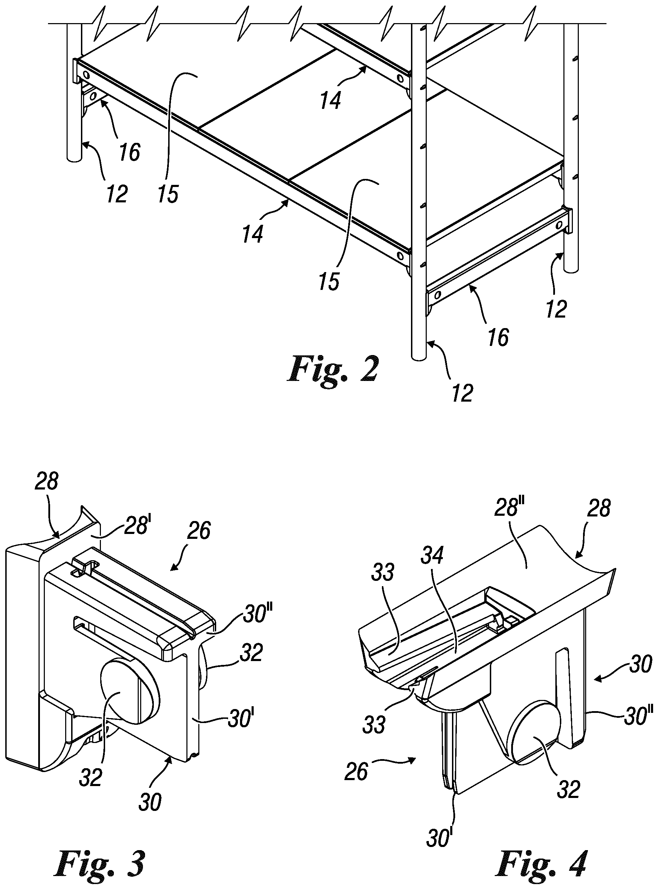

Figures 3 and 4 show a first connection element 26 for assembling the shelving unit, as better described below. The connection element 26 (or female fitting) comprises a first base body 28 from a front 28' of which it extends in a direction perpendicular to said front, a protruding leg 30 with a "T"-shaped sectional outline comprising a vertical portion 30' and a horizontal portion 30" arranged at an end of said vertical portion, a pair of opposing protruding projections 32 coaxial to each other and circular in shape, from opposing fronts of the vertical portion 30' of the protruding leg 30.

The base body 28 comprises an insert seat 34 (which, in the embodiment in the drawings, has a generally "dovetail"-shaped sectional outline) formed at a front 28'' (opposite to front 28') in the thickness of said base body 28 and extending in a longitudinal extension direction of said base body 28; the insert seat 34 comprises a pair of opposing protruding teeth 33 extending for the whole extension in length of said insert seat 34.The base body 28 comprises an insert seat 34 (which in the embodiment in the drawings, has a generally "dovetail"-shaped sectional outline) formed at a front 28" (opposite to front 28') in the thickness of said base body 28 and extending in a longitudinal extension direction of said base body 28; the insert seat 34 comprises a pair of opposing protruding teeth 33 extending for the whole extension in length of said insert seat 34.

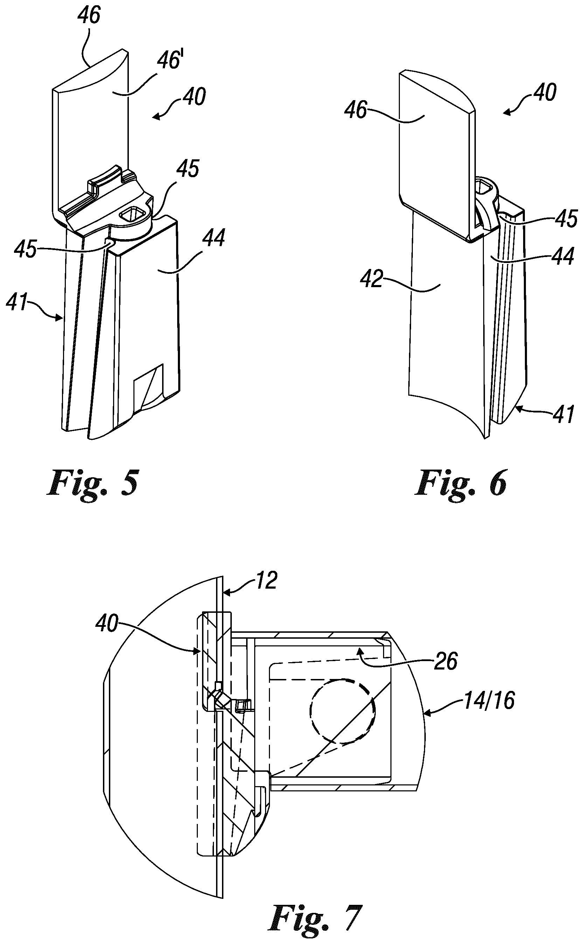

Figures 5 and 6 show a second connection element 40 for assembling the shelving unit, as better described below. The second connection element 40 (or male fitting) comprises a base body 41 comprising a front 42 (rear front) adapted to come into contact, as better detailed below, with the surface of the uprights 12 and with an opposite front from which there extends an insert leg 44 adapted to couple with, as better described below, the insert seat 34 of the first connection element 26; said insert leg 44 comprises a pair of opposing grooves 45 extending for the whole extension in length of said insert leg 44 and with an outline corresponding to that of the pair of opposing teeth 33 of the insert seat 34 of the first connection element 24.

The second connection element 40 further comprises an attachment leg 46 extending from an end edge of front 42 of the base body 41 in the longitudinal extension direction of the base body and with a generally "L"-shaped outline.

The first connection element 26 (female fitting) and the second connection element 40 (male fitting) are made of plastic material (possibly loaded with reinforcing fibers) or of metal material of the zamak type, aluminum or alloys thereof, and similar materials suitable for the purpose. Said first connection element 26 (female fitting) and second connection element 40 (male fitting) are coupled to each other, as better described below.

For the assembly of the shelving unit, the second connection element 40 (male fitting) couples with the uprights 12 and, in particular, the attachment leg 46 inserts into the opening 18 of upright 12, with front 42 of the base body 41 coming into contact with the outer surface of said upright and with an anterior front 36' of the attachment leg 46 coming into contact with an inner surface of the same upright 12.

The first connection element 26 couples with the side beams 14 and with the cross members 16 (at the opposing ends) and, more specifically, the protruding leg 30 inserts into the side beam 14 or the cross member 16 with the opposing protruding projections 32 inserting into the transverse through openings or holes 22 of the side beam and into the transverse through openings or holes 24 of the cross member 16, creating a stable constraint of said first attachment element with respect to said side beam and cross member. The side beam 14 and the cross member 16 thus provided with the first connection elements 26 (or female fittings) couple with the uprights 12 provided with second connection elements 40 (or male fitting) and, in particular, the insert leg 44 of the second connection element 40 inserts into the insert seat 34 of the first connection element 26; with the coupling described, the pair of opposing protruding teeth 33 of the insert seat 34 of the first connection element 26 inserts into the corresponding pair of opposing grooves 45 of the insert leg 44 of the second connection element, with such a coupling defining a stable, rigid and anti-rotation constraint.

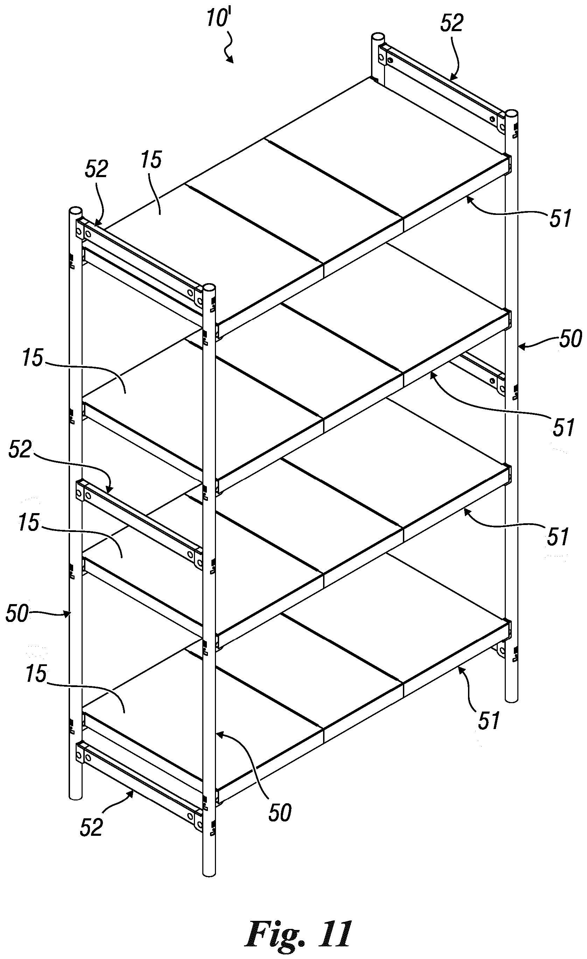

With reference to Figures 11 to 22, they show an improved modular shelving unit according to the invention and according to an embodiment alternative to the one object of the above description, with such an embodiment identified globally by reference numeral 10'.

The components common to the preferred embodiment will not be subject of a detailed description.

The shelving unit according to the alternative embodiment comprises vertical uprights 50, side beams 51 arranged in pairs for each shelf of the shelving unit and positioned between two parallel vertical uprights 50 to support the horizontal shelves 15, cross members 52 arranged between two vertical uprights 50 transversely to the side beams and functional to making the vertical uprights 50 integral with each other and, further, the shelving unit of the invention comprises quick attachment means of said side beams with respect to the vertical uprights and of said cross members with respect to said vertical uprights.

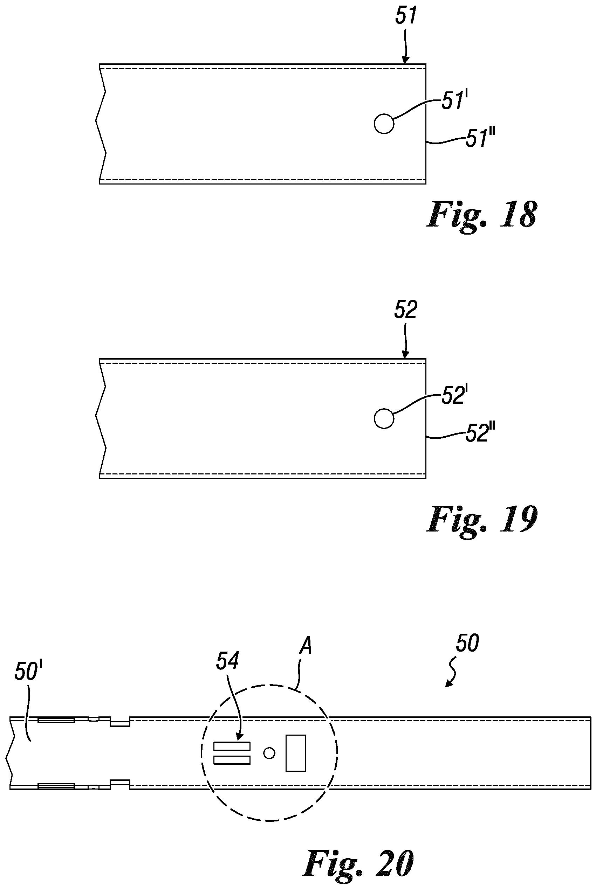

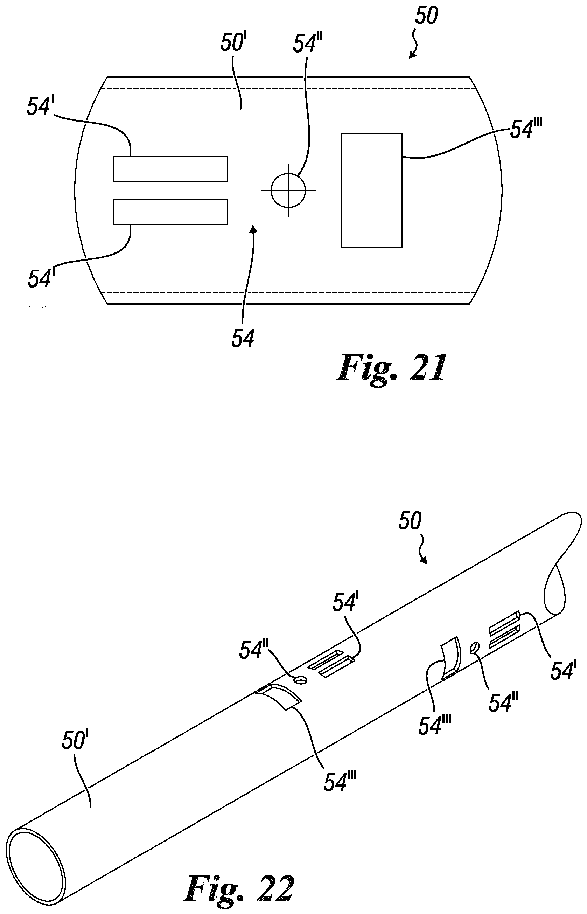

The single vertical upright 50, schematized in Figures 20 to 22, consists of a longitudinally extending tubular element 50' provided along the faces (at least two faces) having longitudinal extension with a plurality of opening groups 54 of through type, with the single opening group (better shown in enlarged detail "A" in Figure 21) comprising a pair of first openings 54' preferably having rectangular outline and parallel to each other and extending in the longitudinal extension direction of the tubular element 50', a second opening 54" of circular type and a third opening 54''' having rectangular outline and extending in a direction transverse to the longitudinal extension of the tubular element 50', with the second opening 54" in intermediate position between the pair of first openings 54' and the third opening 54''' and with said last third opening 54''' preferably having larger dimensions than those of the single first openings.

The single side beam 51 and the cross member 52 have the same sectional profile and comprise a tubular element having longitudinal extension which, at each of the opposing ends 51'' and 52'', comprises a transverse through opening or hole 51' and 52', respectively.

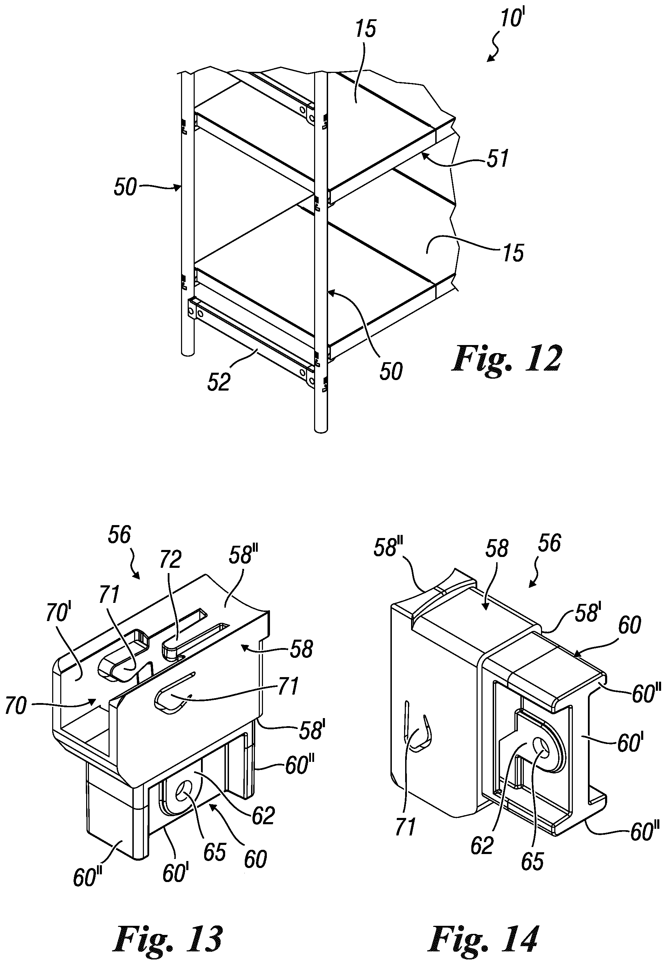

Figures 13 and 14 show a first connection element 56 for assembling the shelving unit according to the alternative embodiment.

The first connection element 56 (or female fitting) comprises a first base body 58 from a front 58' of which, in a direction perpendicular to said front, a protruding leg 60 extends, with a "double-T" sectional outline comprising a vertical portion 60' and two opposing parallel horizontal portions 60" arranged at the ends of said vertical portion, a pair of opposing protruding projections 62 is formed from opposing fronts of the vertical portion 60' of the protruding leg 60, with said projections protruding externally and crossed by a through hole 65, which dimensions in diameter substantially correspond to the dimensions of a transverse through opening or hole 51' of the side beam 51 and of the through opening or hole 52' of the cross member 52.

The base body 58 comprises an insert seat 70 of the pocket type formed in the thickness of said base body from a front 58" (opposite to front 58') and extending in a longitudinal extension direction of said base body 58; the insert seat 70 comprises a pair of opposing protruding teeth 71 extending from the side surfaces 70' of said insert seat, and a further tooth 72 extending over the front 58" in a longitudinal extension direction of the insert seat 70 and in intermediate position with respect to the pair of opposing protruding teeth 71.

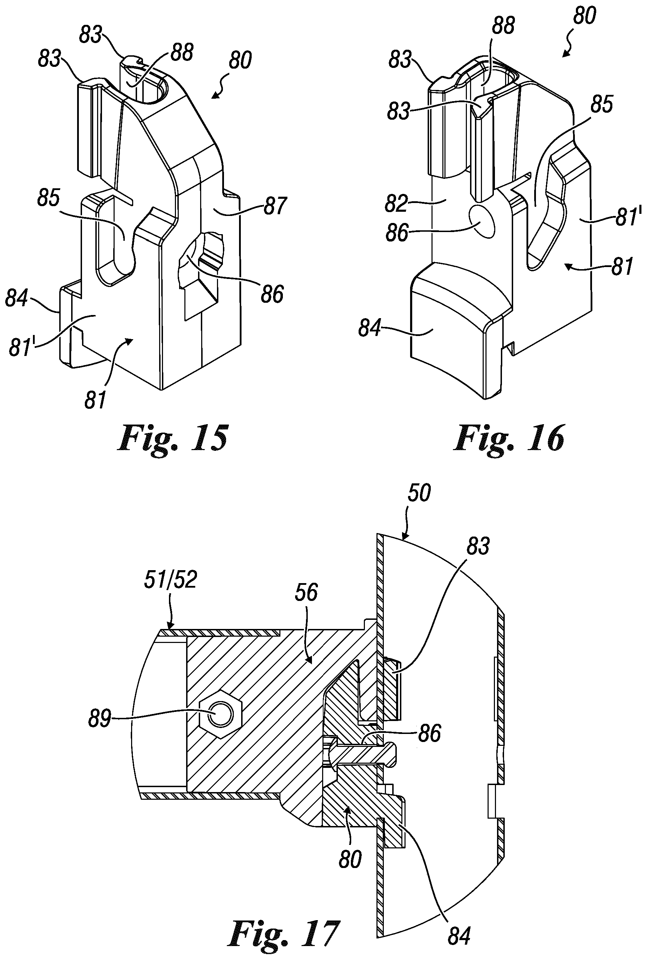

Figures 15 and 16 show a second connection element 80 for assembling the shelving unit according to the alternative embodiment.

The second connection element 80 (or male fitting) comprises a base body 81 comprising a front 82 (rear front) adapted to come into contact, as better described below, with the surface of the uprights 50 and from which there extends a pair of opposing and parallel first attachment portions 83 adapted to couple with the pair of first openings 54' of an opening group 54 of upright 50 and a second attachment portion 84 adapted to couple with the third opening 54‴ of the same opening group 54, as better described below.

The base body 81 of said second connection element 80 comprises a pair of opposing and parallel pockets 85 formed on the opposing side walls 81' of said base body and having an outline corresponding to the one of the pair of opposing protruding teeth 71 of the first connection element 56.

A through hole 86 is formed from an anterior front 87 of the base body 81 in the direction of the rear front 82 of said base body and arranged in a position corresponding to the one of the second opening 54'' of circular type of the opening group 54, as better described below.

Said first connection element 56 (female fitting) and second connection element 80 (male fitting) are coupled to each other, as better described below, similar to what described with reference to the main or preferred embodiment.

For the assembly of the shelving unit, the second connection element 80 (male fitting) couples with the uprights 50 and, in particular, as described above, the opposing and parallel first attachment portions 83 couple with (in particular, are inserted into) the pair of first openings 54' of an opening group 54 and the second attachment portion 84 couples with (in particular, is inserted into) the third opening 54''' of the same opening group 54.

In case of increased loads on the shelving unit, a screw or rivet or similar constraint means of removable or fixed type is inserted into the through hole 86 of the second connection element 80 for a constraint with respect to the second opening 54'' of circular type of the opening group 54 of upright 50.

The first connection element 56 couples with the side beams 51 and with the cross members 52 (at the opposing ends) and, more specifically, the protruding leg 60 inserts into the side beam 51 or the cross beam 52 with the opposing protruding legs 62 that position themselves with the through hole 65 coupling with the transverse through opening or hole 51' of the side beam 51 and with the through opening or hole 52' of the cross beam 52 and with a constraint or retaining element defined by a screw 89 or the like inserted into said through openings or holes to rigidly lock said first attachment element 56 with respect to the side beam 51 and the cross member 52.

The side beam 51 and the cross member 52 thus provided with the first connection elements 56 (or female fittings) couple with the uprights 50 provided with second connection elements 80 (or male fitting) and, in particular, the second connection element 80 inserts with the base body 81 into the insert seat 70 of the first connection element 56 with the pair of opposing protruding teeth 71 of said first connection element 56 which insert into the pair of opposing and parallel pockets 85 of the second connection element 80 and with the further tooth 72 of said first connection element 56 which inserts into a compartment 88 defined between the opposing and parallel first attachment portions 83 of the second connection element 80, such a coupling defining a stable, rigid and anti-rotation constraint.

As can be seen from the above, the advantages achieved by the improved modular shelving unit of the invention are apparent from the above description.

Due to the use of male-female type connection elements, the improved modular shelving unit of the invention advantageously allows a shelving unit to be assembled without using special tools of the wrench and/or screwdriver type and the like, rather simply using shape couplings.

A further advantage of the modular shelving unit of the invention is that the assembly/disassembly of the same is simple, quick and easy.

A further advantage of the invention is the reduced number of components functional to the assembly, and this allows consequent savings in terms of costs (costs of manufacturing components, assembly costs).

A further advantage of the modular shelving unit of the invention is that it consists of components that are easy to handle having volumes with dimensions that are congruous to be easily handled and to minimize, if not eliminate, the risk of the same to fall or be lost (as may occur when screws, washers or nuts are handled).

A further advantage of the modular shelving unit of the invention is that it is substantially impossible to make mistakes during the assembly because the components thereof allow just one mutual coupling option.

Although the invention was described above with particular reference to an embodiment thereof, given by way of nonlimiting example, several modifications and variations will be apparent to those skilled in the art in light of the above description. Therefore, the present invention aims to encompass all modifications and variants falling within the scope of the following claims.

## Claims

1. An improved modular shelving unit (10, 10') comprising vertical uprights (12, 50), side beams (14, 51) arranged in pairs for each shelf of the shelving unit and positioned between two parallel vertical uprights (12, 50) to support horizontal shelves (15), cross members (16, 52) arranged between two vertical uprights (12, 50) transversely to the side beams (14, 51), the shelving unit being **characterized in that** it comprises male-female type quick attachment means of said side beams (14, 51) with respect to the uprights (12, 50) and of said cross members (16, 52) with respect to said uprights (12, 50), with said male-female type quick attachment means comprising a first connection element (26, 56) (or female fitting) adapted to couple with the side beam (14, 51) and the cross member (16, 52) and a second connection element (40, 80) (or male fitting) adapted to couple with the uprights (12, 50), the first connection element (26, 56) (or female fitting) comprising a first base body (28, 58) from a front (28', 58') of which it extends in a direction perpendicular to said front, a protruding leg (30, 60) comprising a vertical portion (30', 60') from opposing fronts of which a pair of opposing protruding projections (32, 62) extends, the base body (28, 58) further comprising an insert seat (34, 70) formed in the thickness of said base body (28, 58) at a front (28'', 58'') opposite to the front (28', 58') and extending in a longitudinal extension direction of said base body (28, 58) .

2. A modular shelving unit according to claim 1, **characterized in that** the second connection element (40, 80) (or male fitting) comprises a base body (41, 81) comprising a front (42, 82) (or rear front) and an opposite front from which there extends a portion with an outline corresponding in negative to the one of the insert seat (34, 70) of the first connection element (26, 56).

3. A modular shelving unit according to claim 1, **characterized in that** the protruding leg (30) of the first base body (28) comprises a vertical portion (30') with a "T"-shaped outline comprising the vertical portion (30') and a horizontal portion (30") arranged at an end of said vertical portion, the pair of opposing protruding projections (32) coaxial to each other and circular in shape, are formed from opposing fronts of the vertical portion (30') of said protruding leg (30), the insert seat (34) having a "dovetail"-shaped outline with a pair of opposing protruding teeth (33) extending in the whole extension in length of said insert seat (34).

4. A modular shelving unit according to claim 1, **characterized in that** protruding leg (60) of the first connection element 56 (or female fitting) extends with a "double T" sectional outline comprising a vertical portion (60') and two opposing and parallel horizontal portions (60") arranged at the ends of said vertical portion, the pair of opposing protruding projections (62) formed from the opposing fronts of the vertical portion (60') of the protruding leg (60) which are crossed by a through hole (65), the insert seat (70) comprises a pair of opposing protruding teeth (71) extending from the side surfaces (70') of said insert seat and a further tooth (72) extending over the front (58") in a longitudinal extension direction of the insert seat (70) and in intermediate position with respect to the pair of opposing protruding teeth (71).

5. A modular shelving unit according to claim 2, **characterized in that** the second connection element (40) (or male fitting) comprises an insert leg (44) extending with an outline corresponding in negative to the one of the insert seat (34) of the first connection element (26), an attachment leg (46) extending from an end edge of the front (42) of the base body (41) in the longitudinal extension direction of the base body and with a generally "L"-shaped outline, the insert leg (44) comprising a pair of opposing grooves (45) extending for the whole extension in length of said insert leg (44) and with an outline corresponding in negative to the one of the pair of opposing protruding teeth (33) of the insert seat (34) of the first connection element (26).

6. A modular shelving unit according to claim 2, **characterized in that** the second connection element (80) (or male fitting) comprises a base body (81) comprising a front (82) (rear front) from which there extends a pair of opposing and parallel first attachment portions (83) and a second attachment portion (84), a pair of opposing and parallel pockets (85) formed on opposing side walls (81') of said base body with an outline corresponding to that of the pair of opposing protruding teeth (71) of the first connection element (56), a through hole (86) is formed from an anterior front (87) of the base body (81) in the direction of the rear front (82) of said base body.

7. A modular shelving unit according to the preceding claims, **characterized in that** the single uprights (12) comprise a longitudinally extending tubular element (12') provided along the faces having longitudinal extension with a plurality of through type openings (18) equally spaced apart from one another and comprising a first portion (18') with a generally rectangular outline which joins, by means of a pair of opposing shoulders (18"), with a second portion (18‴), equally with a generally rectangular outline and with smaller dimensions than those of the first portion (18').

8. A modular shelving unit according to the preceding claims, **characterized in that** the single side beam (14) and the cross member (16) have the same sectional profile and comprise a tubular element (14', 16') having longitudinal extension which, at each of the opposing ends (14", 16"), comprises a transverse through opening or hole (22, 24) and a transverse pocket (23, 25) extending for an "L"-shaped stretch from an edge of the opposing ends and in the longitudinal extension direction.

9. A modular shelving unit according to the preceding claims, **characterized in that** the single side beam (51) and the cross member (52) have the same sectional profile and comprise a tubular element having longitudinal extension which, at each of the opposing ends (51'', 52"), comprises a transverse through opening or hole (51', 52'), respectively.

10. A modular shelving unit according to the preceding claims, **characterized in that** the vertical upright (50) consists of a longitudinally extending tubular element (50') provided along the longitudinal extension with a plurality of groups of through type openings (54), each opening group comprising a pair of first openings (54') preferably having rectangular outline and reciprocally parallel and extending in the longitudinal extension direction of the tubular element (50'), a second opening (54'') of circular type and a third opening (54‴) having rectangular outline and extending in a direction transverse to the longitudinal extension direction of the tubular element (50'), the second opening (54") in intermediate position between the pair of first openings (54') and the third opening (54‴) and with said last third opening (54‴) preferably having larger dimensions than those of the single first openings.

11. A modular shelving unit according to the preceding claims, **characterized in that** the first connection element (26) (or female fitting) couples with the side beams (14) and with the cross members (16) at the opposing ends with the protruding leg (30) inserting into the side beam (14) and the cross member (16), and with the opposing protruding projections (32) inserting into the transverse through openings or holes (22, 24) of the side beam and the cross member 16, the second connection element (40) (male fitting) couples with the uprights (12) with the attachment leg (46) inserting into the opening (18) of the upright (12) with the front (42) of the base body (41) coming into contact with the outer surface of said upright and with an anterior front (36') of the attachment leg (46) coming into contact with an inner surface of the same upright (12), the insert leg (44) of the second connection element (40) inserting into the insert seat (34) of the first connection element (26) with the pair of opposing protruding teeth (33) of said insert seat (34) of the first connection element (26) inserting into the corresponding pair of opposing grooves (45) of said insert leg (44) of the second connection element (40) for the connection of the side beams (14) and cross members (16) to the uprights (12).

12. A modular shelving unit according to the preceding claims, **characterized in that** the first connection element (56) couples with the side beams (51) and with the cross members (52), the protruding leg (60) inserting into the side beam (51) or the cross member (52) with the opposing protruding projections (62) positioning with the through hole (65) coupling with the transverse through opening or hole (51)') of the side beam (51) and with the through opening or hole (52') of the cross member (52) and with a constraint or retaining element defined by a screw (89) or the like inserted into said through openings or holes to rigidly lock said first attachment element (56) to the side beam (51) of the cross member (52), the side beam (51) and the cross member (52) provided with the first connection elements (56) (or female fittings) coupling with the uprights (50) provided with second connection elements (80) (or male fitting), the second connection element (80) inserting with the base body (81) into the insert seat (70) of the first connection element (56), with the pair of opposing protruding teeth (71) of said first connection element (56) inserting into the pair of opposing and parallel pockets (85) of the second connection element (80) and with the further tooth (72) of said first connection element (56) inserting into a compartment (88) defined between the opposing and parallel first attachment portions (83) of the second connection element (80).
